(19) **Europäisches Patentamt**

**European Patent Office**

**Office européen des brevets**

(11) **EP 1 726 904 A2**

(12) **EUROPEAN PATENT APPLICATION**

(43) Date of publication:
29.11.2006 Bulletin 2006/48

(51) Int Cl.:
*F28F 3/02* (2006.01)  *F28D 7/16* (2006.01)
*F28F 1/04* (2006.01)  *D06F 58/24* (2006.01)
*B23K 1/00* (2006.01)

(21) Application number: 06010952.7

(22) Date of filing: 26.05.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 27.05.2005  KR 20050045239

(71) Applicant: LG Electronics Inc.
Yongdungpo-Gu
Seoul (KR)

(72) Inventors:
• Lee, Hyun-Uk
  Gyeongsangnam-Do (KR)
• Oh, Jung-Geun
  Gimhae, Gyeongsangnam-Do (KR)
• Eom, Yoon-Seob
  Gyeongsangnam-Do (KR)

(74) Representative: Vossius & Partner
Siebertstrasse 4
81675 München (DE)

(54) **Heat exchanger for dryer and condensing type dryer having the same**

(57) A heat exchanger (30) for a dryer includes a plurality of tube units (32) in which wet air is circulated, and a plurality of fin units (34) alternately laminated with the plurality of tube units (32), in which external air flows. The tube and fin units (32,34) are bonded to one another at contact portions by a cladding material interposed therebetween. The cladding material is formed of a material having a melting point lower than the melting points of the tube and fin units (32,34). The cladding material can be a metallic material including aluminum or aluminum alloy. A very thin layer of cladding material helps to increase the heat transfer efficiency of the device. Likewise, using a cladding material with good thermal transfer characteristics helps to improve the heat transfer efficiency of the device. Bonding the tube units to the fin units (32,34) using such a cladding material can reduce the fabrication cost and fabrication time compared to heat exchange units where the bonding is done with an epoxy.

FIG. 3

EP 1 726 904 A2

**Description**

The present invention relates to a heat exchanger for a dryer, and more particularly, to a heat exchanger for a dryer capable of enhancing a thermal transmission efficiency, and a fabrication method thereof.

Generally, a dryer for drying clothing performs a drying operation by blowing hot air generated by a heater into a drum. Dryers are largely divided into an exhausting type and a condensing type according to a processing method for wet air generated when an object to be dried is dried. In the exhausting type, wet air exhausted from a drum is exhausted outside the drying apparatus. In the condensing type, wet air exhausted from a drum is condensed in a condenser to remove water from the air, and then the dried air is fed back to the drum.

The condensing type dryer comprises a drum for drying washing laundry, a filter for filtering foreign materials, a heat exchanging unit (condenser) for removing moisture from the air used to dry the laundry by a heat exchange, a fan for generating an air flow, a heater for generating hot air, and piping for connecting the components.

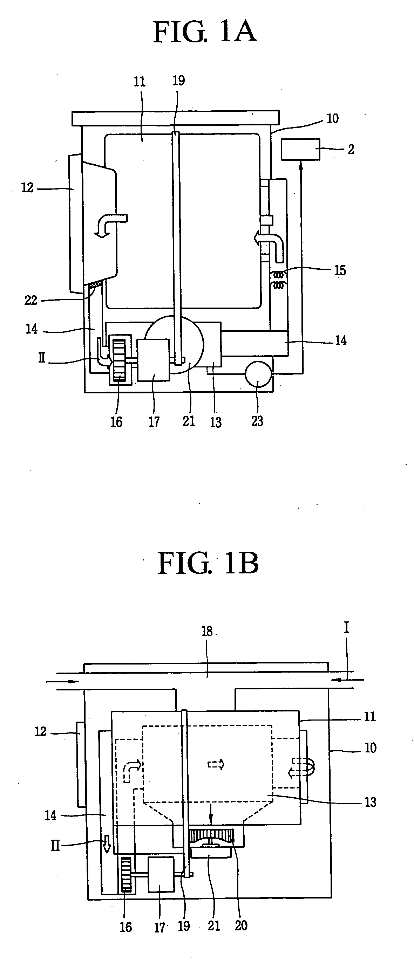

FIGS. 1A and 1B show a condensing type dryer in accordance with the conventional art. Referring to FIGS. 1A and 1B, the arrow I denotes a flow of external air, and the arrow II denotes a flow of circulation air. As shown, a drum 11 for receiving an object to be dried is rotatably installed in a body 10 having a door 12 at a front surface thereof. The drum 11 is connected to a belt 19, and is rotated by a motor 17 installed at a lower portion of the body 10.

A heat exchanger (a condenser) 13 for condensing high-temperature humid air circulated through the drum 11 and thereby removing moisture from the air is installed at a lower portion of the body 10. A frontal portion and a rear portion of the heat exchanger 13 are connected to a circulation duct 14 respectively connected to a front side and a rear side of the drum 11, so that air that has been exhausted through the drum 11 can be re-introduced into the drum 11 via the heat exchanger 13.

A heater 15 for heating air that has passed through the heat exchanger 13, and a circulation fan 16 for forcibly circulating air through the circulation duct 14 are installed at the circulation duct 14. The circulation fan 16 is connected to another shaft of the motor 17 for driving the drum 11.

In order for the heat exchanger 13 to condense air being circulated through the circulation duct 14, cold air has to be supplied to the heat exchanger 13 from outside. Accordingly, an external air supplying duct 18 connected to outside of the body 10 is connected to one side of the heat exchanger 13, and a cooling fan 20 and a cooling fan driving motor 21 for forcibly sucking external air through the external air supplying duct 18 and then exhausting the air into the body 10 are installed at another side of the heat exchanger 13. Reference numeral 22 denotes a filter for filtering foreign materials such as lint, etc. from air that is exhausted to the circulation duct 14 via a front side of the drum 11. A water tank (not shown) for containing condensing water generated by the condensing operation is installed at a lower portion of the heat exchanger 13. Also, a pump 23 for supplying water contained in the water tank to a condensing water storage tank 2 is installed at a lower portion of the heat exchanger 13.

It is desirable to dry washing laundry with minimal consumption of power in the shortest possible time. To aid these goals, a method for increasing a heater capacity or a fan capacity has been proposed. However, these methods result in additional cost for the dryer, and/or an electricity charge increase due to high consumption of power and/or a noise increase.

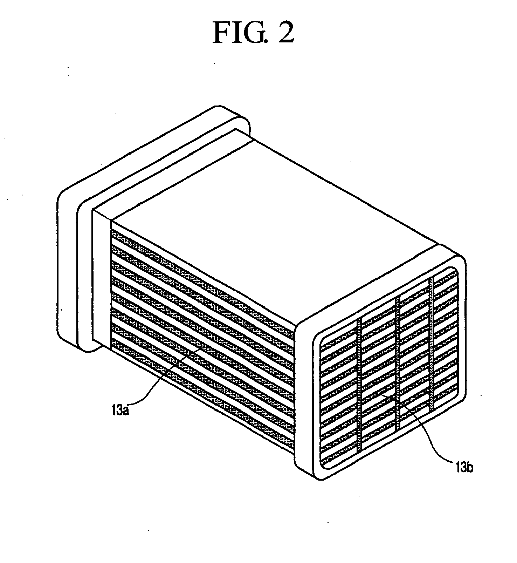

Fig. 2 shows a heat exchanger which may be used in a conventional art condensing type dryer. In this heat exchanger dry air passes through external air inlets 13a, and wet air to be condensed passes through wet air inlets 13b. The wet air is condensed, to form water droplets on the insides of the wet air passages.

An object of the present invention is to provide a heat exchanger for a dryer capable of enhancing a thermal exchange efficiency.

Another object of the present invention is to provide a dryer having a heat exchanger capable of enhancing a drying efficiency by improving a thermal exchange efficiency of the heat exchanger.

To achieve these and other advantages, and in accordance with the purpose of the present invention, as embodied and broadly described herein, a heat exchanger for a dryer embodying the invention includes a plurality of tube units of a duct type through which wet air is circulated; and a plurality of fin units alternately laminated with the plurality of tube units through which external air flows. The tube units and the fin units are bonded to each other with at least one contact portion which has a cladding material interposed therebetween.

Each tube unit has opened ends, and may have a rectangular cross-sectional shape. Each fin unit includes a plurality of air passages through which external air flows, and a plurality of fins are formed in the air passages.

The cladding material is formed of a material having a melting point that is lower than the melting points of the tube units and fin units. In some instances, the cladding material may be formed of aluminum or aluminum alloy.

A condensing type dryer embodying the invention would have a heat exchanger as described above.

A method embodying the invention for fabricating a heat exchanger for a dryer includes depositing a cladding material at least one surface of a plurality of tube units; affixing a plurality of fin units, each having a plurality of air passages in which a plurality of fins are formed, to the tube units. The tube units and the fin units may be attached to each other at contact portions, with the cladding material interposed therebetween, by applying heat thereto. Of course, the cladding material could also be applied to surfaces of the plurality of fin units instead of the tube units before the tube units and fin units are joined together.

The cladding material may be deposited as a layer on a surface of the tube units or the fin units with a layer thickness less than 1mm. Preferably the layer thickness is less than 0.5mm, and more preferably less than 0.1mm.

The bonding process is performed at a temperature that is higher than a melting point of the cladding material and lower than the melting points of the tube and fin units.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

FIG. 1A is a sectional view showing a clothing dryer in accordance with the conventional art;
FIG. 1B is a plan view of the clothing dryer of FIG. 1A;
FIG. 2 is a perspective view showing a heat exchanger in accordance with the conventional art;
FIG. 3 is an unfolded view showing components of a heat exchanger according to the present invention;
FIG. 4 is a perspective view showing a lamination structure of a heat exchanging unit of the heat exchanger according to the present invention;
FIG. 5A is a sectional view showing a structure of the heat exchanging unit of the heat exchanger according to the present invention;
FIG. 5B is a sectional view showing that a cladding material is deposited on a surface of a tube unit according to the present invention;
FIG. 6 is a flowchart showing a process for fabricating the heat exchanger according to the present invention;
FIG. 7 is a photo showing a fin structure of the heat exchanger according to the present invention; and
FIG. 8 is a graph showing a thermal transmission efficiency of the heat exchanger according to the present invention.

Reference will now be made in detail to preferred embodiments of the present invention, examples of which are illustrated in the accompanying drawings.

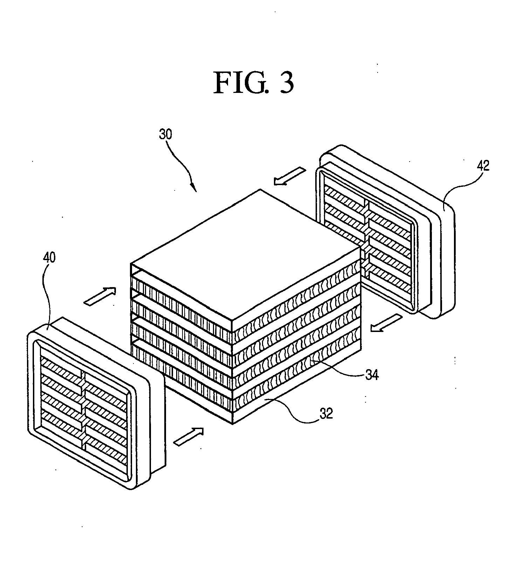

As shown in Fig. 3, a heat exchanging unit 30 is formed as a plurality of tube units 32 and a plurality of fin units 34, which are alternately laminated to one another. The tube units 32 have a duct structure, in which both ends thereof are opened. A cross-sectional surface thereof may have a rectangular shape, or some other shape. Piping (not shown) through which circulation air inside a dryer flows, is connected to the two opened ends of the tube units 32.

The fin units 34 comprises a structure which includes a thin flat plate that has been repeatedly curved in a zigzag form. A plurality of fins may also be formed on a surface of the zigzag curved plate.

As one example, a metal flat plate is folded in a zigzag to construct a rectangular parallel piped structure having a certain thickness, width, and length, thereby completing the fin unit 34. When a metal flat plate is folded in a zigzag form, the resulting structure has alternating peaks and valleys. Tube units 32 are then bonded to upper and lower surfaces of the fin units. The passages between the peaks and valleys serve as air passages through which external air is introduced and then is exhausted out after being heat-exchanged.

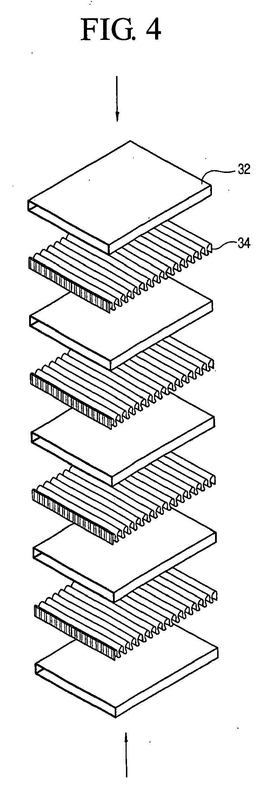

A heat exchanging unit can be created as the tube units 32 and the fin units 34, each having a relatively thin thickness, are alternately laminated to one another. As the tube units 32 and the fin units 34 are repeatedly laminated, a thermal transmission area can be increased. A lamination process between the tube units 32 and the fin units 34 will be explained with reference to FIG. 4.

The tube units 32 and the fin units 34 are formed of a metal having an excellent thermal transmission characteristic, and are mainly formed of aluminum or aluminum alloy.

A front cover 40 and a rear cover 42 are respectively coupled to a front surface and a rear surface of the heat exchanging unit 30. The front cover 40 and the rear cover 42 enable the heat exchanging unit 30 to be easily bonded to a pipe or other components inside the dryer. The front cover 40 and the rear cover 42 are formed of a plastic material such as ABS-GF, etc. by an injection-molding method. A sealing member for preventing an air leakage can be further formed at each contact portion between the front cover 40 and the rear cover 42 and the two ends of the heat exchanging unit 30.

The bonding process used to connect the tube units 32 and the fin units 34 is important to the thermal transmission efficiency of the heat exchanger. Since the fin units 34 have a repeated curved structure, a contact portion between the fin units 34 and the tube units 32 does not have a large area. Therefore, it is important for the heat exchanger to smoothly transmit heat through the contact portions between the fin units 34 and the tube units 32.

Since the contact portion between the tube units 32 and the fin units 34 is not large, the tube units 32 and the fin units 34 can be bonded to each other using an adhesive. However, an adhesive is generally formed of a polymer material having an inferior thermal transmission characteristic, which results in poor thermal transmission.

Therefore, in the present invention, the tube units 32 and the fin units 34 are bonded to each other by interposing a cladding material having a metal component with an excellent thermal transmission characteristic.

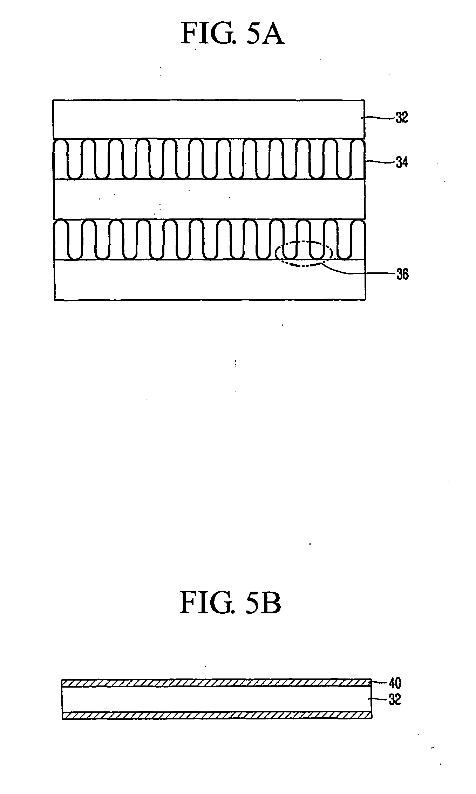

As shown in FIG. 5A, a contact portion between the tube units 32 and the fin units 36 has a very small area. It is desirable to place a cladding material having almost no thickness between the units. The cladding material can include an adhesive component and a volatile component in addition to a metal component. As shown in FIG. 5B, the cladding material 40 may be deposited on at least one surface of the tube units 32. Even though the cladding 40 appears relatively thick in the drawing, it is desirable for the cladding 40 to be deposited with a thin thickness of less than 1mm, preferably 0.5mm, more preferably, 0.1mm.

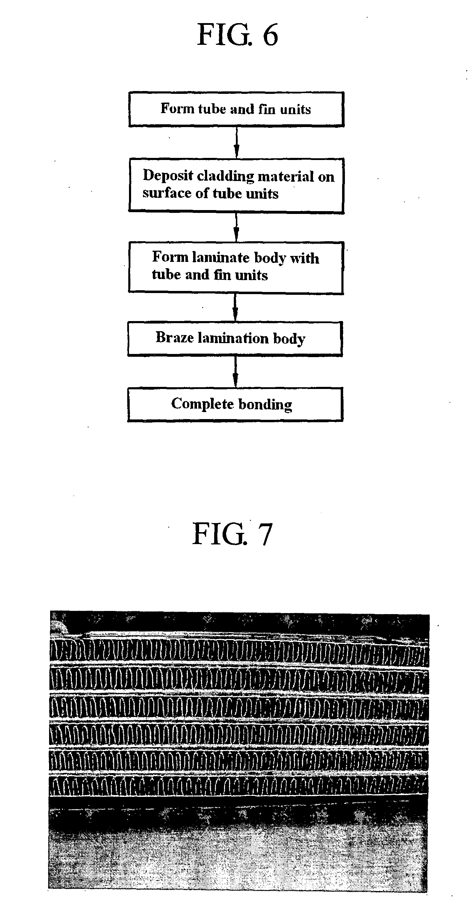

As shown in FIG. 4, the fin units 34 are alternately stacked with the tube units to form the structure of the heat exchanging unit 30. A bonding process is then performed to bond the fin units to the tube units. A bonding process between the tube units 32 and the fin units 34 will be explained with reference to FIG. 6.

First, the tube units 32 and the fin units 34 are prepared. Then, a cladding material having a melting point lower than melting points of the tube and the fin units is deposited on at least one surface of the tube units. Although depositing the cladding material on the tube units is preferable, because it is easier to accomplish, the cladding material could also be applied to the fin units. When the tube and the fin units are formed of aluminum, the cladding material preferably includes a material having a melting point lower than a melting point of the aluminum, which is approximately 550°C. Then, the tube units and the fin units are attached to one another to form the heat exchanging unit.

To accomplish the attachment, the heat exchanging units may be put into a brazing furnace where heat is applied, thereby forming a heat exchanging unit composed of the tube units and the fin units. The brazing is performed at a temperature higher than a melting points of the cladding material, and lower than the melting point of the tube and fin units. Therefore, the cladding material is melted to instantaneously bond the tube and the fin units to each other. Also, at such temperature, the tube and fin units are not thermally damaged.

FIG. 7 shows a side surface of a heat exchanging unit of the heat exchanger according to the present invention. A cladding material having a very thin thickness is interposed between the tube and fin units for bonding. Actually, the cladding material scarcely remains after the tube units and the fin units are bonded to each other. As a result, there is almost no resistive layer to prevent thermal transmission between the tube units and the fin units. Therefore, an enhanced thermal transmission characteristic can be obtained. Furthermore, the brazing-bonding process by using the cladding material requires a very short time, on the order of several minutes. This further helps in simplifying a fabrication process of the heat exchanger as compared to methods where the fin units are glued to the tube units. Also, since a small amount of cladding material is used, a material cost is reduced.

An enhanced performance of the heat exchanger according to the present invention can be illustrated as follows. Assuming that a resistance to prevent a thermal transmission is R, the resistance R can be represented as follows.

$$R = k \ t/A$$

Herein, the k represents a proportional constant, t denotes a thickness, and A denotes an area.

If a bonding layer for bonding the tube units and the fin units exists, a total resistance to prevent a thermal transmission ($R_{total}$) can be represented as follows.

$$R_{total} = R_i + R_m$$

Herein, the $R_i$ represents a resistance to prevent a thermal transmission between the tube and fin units, and the $R_m$ represents a thermal resistance of the bonding layer. For example, if the tube and fin units are formed of aluminum having a thickness of 0.05mm and the bonding layer is formed of an epoxy material, the total resistance can be represented as follows.

$$R_{total} = 0.004 \ K/W + 0.005 \ K/W = 0.0045 \ K/W$$

Thus, a resistance to thermal transmission occurs because the bonding layer exists. Therefore, a thermal transmission will be enhanced if the thickness of the bonding layer is reduced, and if the thermal heat exchange characteristics of the bonding material layer are improved.

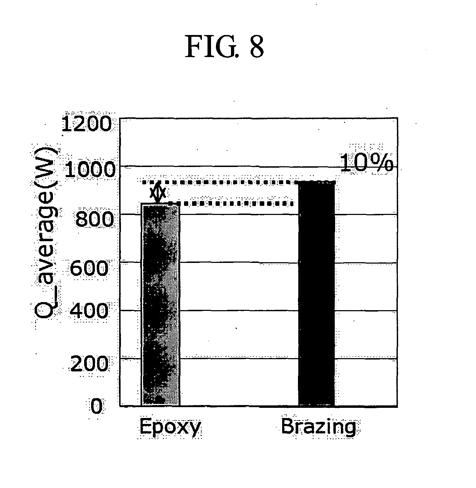

FIG. 8 is a graph showing a thermal transmission efficiency of the heat exchanger according to the present invention. Referring to FIG. 8, the heat exchanger fabricated by a brazing-bonding method according to the present invention shows a thermal transmission efficiency that is enhanced by approximately 10% compared to the conventional heat exchanger fabricated by an epoxy-bonding method.

As aforementioned, in the present invention, a thermal transmission efficiency can be greatly enhanced by improving a structure and a fabrication process of the heat exchanger. Also, since a fabrication cost of the heat exchanger is reduced, a fabrication cost of a dryer having the heat exchanger can be reduced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

**Claims**

1. A heat exchanger, comprising:

   a plurality of tube units configured to convey a first fluid flow; and
   a plurality of fin units configured to convey a second fluid flow, wherein the plurality of tube units and fin units are stacked upon one another in an alternating fashion, and wherein adjacent portions of the tube units and fin units are bonded to one another at a contact portion by a cladding material interposed between the tube units and fin units.

2. The heat exchanger of claim 1, wherein the tube units are configured to convey a warm moisture laden flow of air, and wherein the fin units are configured to convey a flow of ambient air such that heat from the warm moisture laden flow of air is transferred to the flow of ambient air.

3. The heat exchanger of claim 1 or 2, wherein each of the tube units has a rectangular cross-sectional shape, and wherein ends of the tube units are open.

4. The heat exchanger of claim 3, wherein each of the fin units comprises a fluid flow passage, and wherein a plurality of heat exchanger fins are formed in the fluid flow passage.

5. The heat exchanger of any of claims 1 to 4, wherein the cladding material comprises a material having a melting point that is lower than melting points of the tube units and fin units.

6. The heat exchanger of any of claims 1 to 5, wherein the cladding material comprises aluminum or aluminum alloy.

7. A heat exchanger for a dryer, comprising:

   a plurality of tube units configured to convey a first fluid flow; and
   a plurality of fin units configured to convey a second fluid flow, wherein the plurality of tube units and fin units are stacked upon one another in an alternating fashion, and wherein adjacent portions of the tube units and fin units are brazed or soldered together at a contact portion using a bonding material that is interposed between the tube units and fin units.

8. The heat exchanger of claim 7, wherein the bonding material comprises a metal or metal alloy.

9. The heat exchanger of claim 8, wherein the bonding material comprises aluminum or aluminum alloy

10. The heat exchanger of any of claims 7 to 9, wherein a melting point of the bonding material is lower than melting points of the tube units and fin units.

11. A condensing type dryer comprising the heat exchanger of any of claims 1 to 10.

12. A method of making a heat exchanger, comprising:

depositing cladding material on at least one surface of each of a plurality of tube units configured to conduct a first fluid flow;

stacking the plurality of tube units with a corresponding plurality of fin units that are configured to conduct a second fluid flow in an alternating fashion such that the cladding material is located at contact portions between adjacent ones of the tube units and fin units; and

bonding the tube units to the fin units with the cladding material.

13. The method of claim 12, wherein the bonding step comprises:

raising the temperature of the stacked tube units and fin units to a temperature that is above the melting point of the cladding material, but below the melting points of the tube units and fin units; and

cooling the stacked tube units and fin units to a temperature below the melting point of the cladding material.

14. The method of claim 12 or 13, wherein the depositing step comprises depositing a cladding material that comprises a metal or metal alloy.

15. The method of claim 12 or 13, wherein the depositing step comprises depositing a cladding material that comprises aluminum or aluminum alloy.

16. The method of any of claims 12 to 15, wherein the depositing step comprises depositing a layer of cladding material having a thickness of less then 1mm on at least one surface of the plurality of tube units.

17. A method of making a heat exchanger, comprising:

depositing cladding material on surfaces of at least one of a plurality of tube units configured to conduct a first fluid flow or a plurality of fin units configured to conduct a second fluid flow;

stacking the plurality of tube units and the plurality of fin units in an alternating fashion such that the cladding material is located at contact portions between adjacent ones of the tube units and fin units; and

bonding the tube units to the fin units with the cladding material.

18. The method of claim 17, wherein the bonding step comprises:

raising the temperature of the stacked tube units and fin units to a temperature that is above the melting point of the cladding material, but below the melting points of the tube units and fin units; and

cooling the stacked tube units and fin units to a temperature below the melting point of the cladding material.

19. The method of claim 17 or 18, wherein the depositing step comprises depositing a layer of cladding material containing aluminum or aluminum alloy such that the cladding material forms a layer having a thickness of less than 1mm.

# FIG. 1A

# FIG. 1B

FIG. 2

# FIG. 3

# FIG. 4

# FIG. 5A

# FIG. 5B

# FIG. 6

Form tube and fin units

↓

Deposit cladding material on
surface of tube units

↓

Form laminate body with
tube and fin units

↓

Braze lamination body

↓

Complete bonding

# FIG. 7

FIG. 8